# EUROPEAN PATENT SPECIFICATION

(11) **EP 1 538 033 B1**
(45) Date of publication and mention of the grant of the patent: **02.01.2008**
(21) Application number: 04026144.8
(22) Date of filing: 04.11.2004
(51) Int. Cl.: B60R 21/16

(54) **Head-protecting airbag and vehicle**
Kopfschutzgassack und Fahrzeug
Sac gonflable pour protéger la tête et véhicule

(30) Priority: 02.12.2003 JP 2003403197
(43) Date of publication of application: 08.06.2005
(73) Proprietor: TAKATA CORPORATION, Minato-ku, Tokyo 106-8510 (JP)
(72) Inventor: Noguchi, Atsushi c/o Takata Corporation, Minato-ku Tokyo 106-8510 (JP)
(74) Representative: Banzer, Hans-Jörg

(56) References cited:
- WO-A-02/40322
- GB-A- 2 387 150
- US-A- 3 687 485
- US-A- 5 660 414
- US-A- 5 752 713
- US-A1- 2003 001 364
- US-B1- 6 308 982

## Description

The present invention relates to airbags for protecting the head of a vehicle occupant, and more in detail, it relates to an airbag to be inflated along a side door window and the like while having a tension applied along the lower edge of the airbag upon a side-on collision or rolling sideways of an automobile. The present invention also relates to a head-protecting airbag apparatus and a vehicle having this airbag.

### [Background Art]

As an airbag for protecting the head of an automobile occupant, there is a so-called curtain airbag that is arranged in the vicinity of the boundary corner between a ceiling and a side panel of an automobile compartment so as to inflate along a window of a side door by gas induced from a gas inlet.

When an automobile having the curtain airbag apparatus is collided side-on or rolls sideways, the curtain airbag inflates toward the vehicle bottom along the side of the vehicle compartment (a door and a pillar, for example) so as to protect the head of an occupant while preventing the occupant from being thrown out of the vehicle when the door is open.

A type of curtain airbag apparatus is disclosed in US 6,237,938 in that the rear end of the curtain airbag inflating along the compartment panel is led toward the vehicle bottom along a pillar, and a guide member is provided at a C-pillar for generating a tension along the lower border of the inflated curtain airbag.

The guide member in the USP includes a member called a track with a box-shape section and a slider called an element and arranged in the track movably in the longitudinal direction of the track, and the rear end of the curtain airbag is connected to the element. In order to prevent the rear end of the curtain airbag moved downward from returning upward, the curtain airbag is provided with latches substantially arranged along the entire length of the track at equal intervals.

Japanese Unexamined Patent Application Publication No. 2003-81048 discloses a head-protecting airbag apparatus in that the rear of an inflated head-protecting airbag is pulled backward so as to generate a strong tension along the lower border of the head-protecting airbag.

A head-protecting airbag apparatus according to the preamble of independent claim 1 is known from US 6,308,982 and US 2003/001364. This document discloses a roof-mounted airbag in connection with a wire as a tension-applying means, whereby the airbag is inflated from the roof of the vehicle downward so as to cover the entire window portion of the vehicle.

Furthermore, US 2003/001364 discloses a tension-applying mechanism for a head-protecting airbag, which is mounted in a door of a vehicle and, consequently, is inflated upwards.

Further head-protecting airbags are known from US 5,752,713, WO 02/40322, and US 5,660,414.

### [Problems to be Solved by the Invention]

As described above, the movement of an occupant body toward the outside of a vehicle can be suppressed by generating a tension along the lower border of the airbag. It is an object of the present invention to provide a head-protecting airbag, an airbag apparatus, and a vehicle capable of sufficiently suppressing the movement of an occupant body toward the outside of a vehicle.

### [Means for Solving the Problems]

According to the invention this object is achieved by a head-protecting airbag as defined in claim 1, and a vehicle as defined in claim 6. The dependent claim defines a preferred and advantageous embodiment of the invention.

A head-protecting airbag according to the present invention is capable of inflating along a side surface of a vehicle compartment, and includes tension-applying means for applying a tension to the inflated airbag along a lower border of the airbag, wherein when the airbag is inflated, the airbag has a vertical width so as to have a lower-border height of 82.5 mm or less from a beltline.

A head-protecting airbag apparatus according to the present invention includes the head-protecting airbag according to the present invention and an inflator for inflating the head-protecting airbag.

A vehicle according to the present invention includes the head-protecting airbag apparatus. In this vehicle, the tension-applying means includes a linear member extending along a lower border of the inflated head-protecting airbag and means for applying a tension to the linear member, and when the head-protecting airbag is inflated, the linear member may preferably be positioned at a height of 82. 5 mm or less above from the beltline of the vehicle.

### [Advantages]

In the head-protecting airbag, the airbag apparatus, and the vehicle according to the present invention, when the head-protecting airbag is inflated, its lower border is positioned directly above (less than 82.5 mm) the beltline (the lower edge of the side window, i.e., the upper edge of the door panel), and a tension is applied to the lower border of the airbag as well. In such a manner, by reducing the space between the lower border of the inflated head-protecting airbag and the beltline to a value of less than half of the diameter (165 mm) of the spherical head of a dummy doll for a bump test, the movement of the occupant body, the head in particular, toward the vehicle outside, is sufficiently suppressed.

Especially when the linear member for applying a tension to the airbag is positioned within 82.5 mm above the beltline during the inflation of the airbag, the movement of the occupant body toward the vehicle is further sufficiently suppressed.

Embodiments will be described below with reference to the drawings.

### [Brief Description of the Drawings]

Fig. 1 is a side view of the inside of a vehicle compartment having an airbag apparatus according to an embodiment.
Fig. 2 is a sectional perspective view of the rear of the airbag shown in Fig. 1.
Fig. 3 is a sectional view at the line III-III of Fig. 2.
Fig. 4 is a structural drawing of a one-way pulley.
Fig. 5 is a sectional perspective view of the rear of an airbag according to another embodiment.
Fig. 6 is a side view of the inside of a vehicle compartment having an airbag apparatus according to still another embodiment.
Fig. 7 is a perspective view showing a different head-protecting airbag apparatus which does not form part of the invention as claimed.

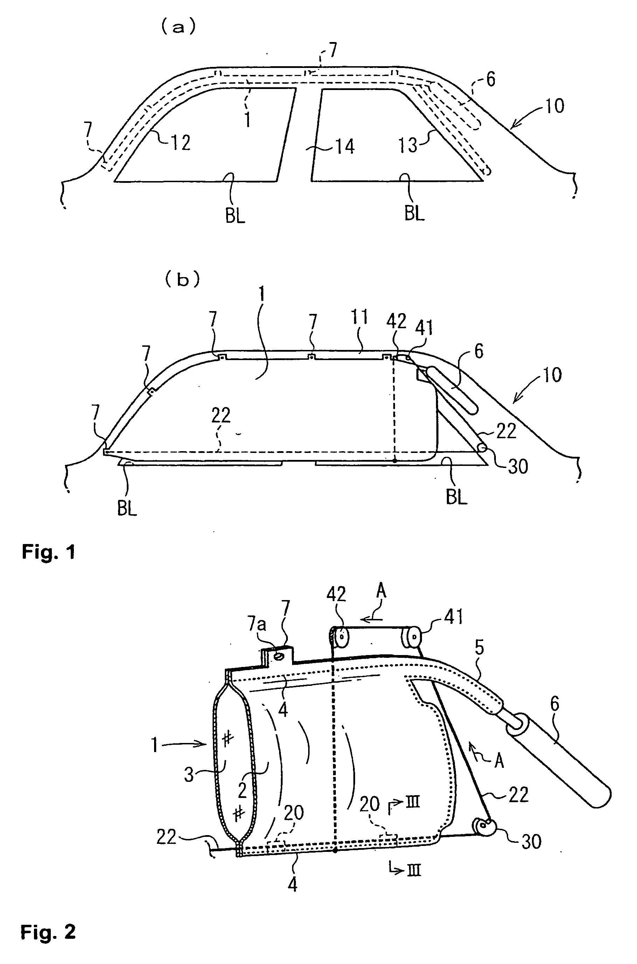

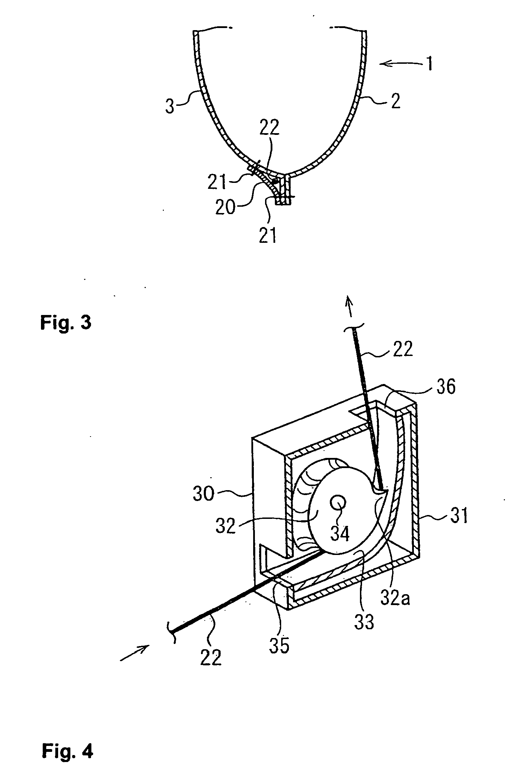

Fig. 1 is a side view of an inside of a vehicle compartment having an airbag according to an embodiment, Fig. 1(a) showing a state of the airbag before inflation and Fig. 1(b) showing an inflated state of the airbag; Fig. 2 is a sectional perspective view of the rear of the inflated airbag; Fig. 3 is a sectional view at the line III-III of Fig. 2; and Fig. 4 is a structural drawing of a one-way pulley.

This head-protecting airbag (may be simply called as an airbag) 1 is provided along a roof side, for example, between an A-pillar and a C-pillar of an automobile in a folded state, and when the vehicle is side-on collided or rolls sideways, the airbag is inflated and deployed along a side of vehicle compartment like a curtain so as to receive heads of occupants sitting on front and rear seats of the automobile cabin, preventing the heads from striking on the cabin side or being thrown out of a window.

The airbag 1 is formed by overlapping two sheets 2 and 3 being substantially identical in shape and making up two surfaces facing the compartment side and the inside the compartment, respectively, so as to combine the peripheral edges of the sheets 2 and 3 together with a linear seam 4. Although not shown, the airbag may also be divided into a plurality of small chambers by stitching the sheets 2 and 3 together so that the bag inside is further divided into several divisions or by providing panels for parting the bag inside.

A duct 5 is extended from the rear of the airbag 1 for inducing gas. To the duct 5, an inflator 6 is connected for inflating the airbag 1.

A plurality of projection pieces (selvages) 7 extend from upper and front borders of the airbag 1, each projection piece 7 having a bolt insertion-hole 7a for fastening the airbag 1 to a vehicle body. The airbag 1 is fastened to a roof side-rail 11 and an A-pillar 12 with the projection pieces 7 in a slenderly folded state so as to extend in a longitudinal direction of the vehicle body. Reference numeral 14 denotes a B-pillar.

The folded body of the airbag 1 arranged in such a manner is covered with a cover member, such as a pillar trim and a roof trim, which is adapted to be forced open by the inflating airbag 1 so as to allow the airbag 1 to be deployed into the vehicle compartment. In Fig. 1(b), the cover member is not shown for brevity.

The airbag 1 is provided with wire holders 20 arranged along the lower edge at predetermined intervals. The wire holder 20 is made of a small cloth piece with the upper and lower sides respectively sewn on the airbag 1 with sewing threads 21. Between the respective wire holders 20 and the airbag 1, a wire (a wire rope woven with synthetic fiber according to the embodiment) 22 is inserted through. The front end of the wire 22 is stuck to the lower front extremity of the airbag 1 by sewing, and is further fixed to the A-pillar 12 with fastening members such as bolts together with the projection piece 7 at the lower front extremity.

The rear end of the wire 22 extended from the lower rear extremity of the airbag 1 is stretched around a one-way pulley 30, and then routed upward along the C-pillar 13. A roof-side rail 11 is provided with pulleys 41 and 42 respectively attached to a rear portion and a portion slightly forward than the former. The wire 22 is stretched around the rear pulley 41 so as to proceed forward, and then stretched around the front pulley 42 so as to proceed downward. The wire 22 is routed to the lower end of the airbag 1 passing through the airbag 1 adjacent to a vehicle door, so that its end is stuck to the lower end of the airbag 1 such as by sewing and the like.

The one-way pulley 30, as shown in Fig. 4, includes a thin box-like case 31, a pulley body 32 arranged inside the case 31, and a guide surface 33 extending in an arch shape along the external periphery of the pulley body 32. The pulley body 32 is rotatably supported to the case 31 with a shaft 34 therebetween. The shaft 34 is eccentric relative to the pulley body 32. The pulley body 32 is provided with an arch-shape bulged portion 32a formed farther from the shaft 34 so as to face the guide surface 33.

Passage holes 35 and 36 for the wire 22 are formed on the front and upper surfaces of the case 31, respectively. The point in the arch-shape bulged portion 32a positioned farthest from the shaft 34 is located adjacent to the passage hole 36. Hence, when the wire 22 moves from the passage hole 35 toward the passage hole 36 as shown in an arrow of Fig. 4, the arch-shape bulged portion 32a moves toward the passage hole 36 accompanied by the wire 22, and the space between the pulley body 32 and the guide surface 33 increases so that the wire 22 passes through the one-way pulley 30 freely. On the other hand, when the wire 22 is to move in a direction opposite to the arrow direction of Fig. 4, the arch-shape bulged portion 32a is to move toward the passage hole 35 accompanied by the wire 22, so that the wire 22 is pinched between the arch-shape bulged portion 32a and the guide surface 33, resulting in stopping of the wire 22.

The operation of a head-protecting airbag apparatus having the airbag 1 structured in such a manner will be described.

Upon a side-on collision or sideway rolling of an automobile, the inflator 6 is operated so as to inflate the airbag 1 by supplying gas into the airbag 1. The airbag 1 pushes the cover member open so as to extend downward along a side of the vehicle compartment like a curtain and to inflate between vehicle occupants and the side of the vehicle compartment. Owing to the inflated airbag 1, the vehicle occupants are prevented from directly striking pillars and window glass or being thrown out of the vehicle.

When the head-protecting airbag is inflated to downward deploy, the rear end of the wire 22 is pulled to move in the arrow A direction of Fig. 2, so that the wire 22 becomes strongly tense along the lower border of the airbag 1. According to the embodiment, the wire 22 in a strongly tense state is positioned within 82.5 mm above a beltline BL, preferably within 80 mm, and more preferably within 70 mm in particular. In such a manner, the lower border of the airbag 1 descends just above the belt line BL so as to have a strong tension applied by the wire 22, so that the movement of vehicle occupants toward the vehicle outside is sufficiently suppressed. Since the one-way pulley 30 is adopted especially according to the embodiment, the slack of the wire 22 along the lower border of the airbag 1 is removed, so that the movement of vehicle occupants toward the vehicle outside is sufficiently suppressed for a long time.

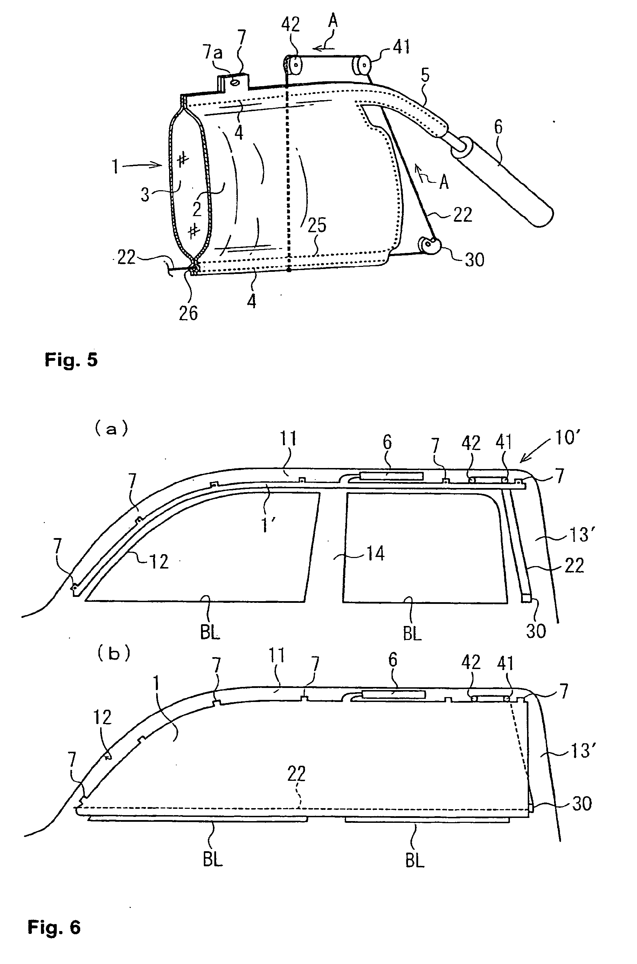

According to the embodiment, a plurality of the wire holders 20, each made of a small cloth piece, are attached in the bottom of the airbag 1. As shown in Fig. 5, the airbag 1 is provided with a seam 25 formed in parallel to the seam 4 formed along the lower edge of the airbag 1 so as to form a tunnel wire path 21 between the seam 4 and 25. The wire 22 may also be inserted through the wire path 21.

According to the embodiment, a vehicle body 10 is a sedan type; alternatively, other types may incorporate the present invention. Fig. 6(a) shows a state that the airbag apparatus is mounted on a vehicle body 10' of a type with a small overhang, such a mini-van; and Fig. 6(b) shows the inflated state of the airbag 1'. According to this embodiment, since a space for arranging the inflator is small in a C-pillar 13', the inflator 6 is arranged in the roof side-rail 11. Other structures in Fig. 6 are the same as in Fig. 1, and like reference characters designate like elements. The airbag 1' also has a strong tension applied by the wire 22 along the lower border when inflated, while the wire 22 is adapted to be positioned within 82.5 mm above the beltline BL, so that the movement of vehicle occupants toward the vehicle outside is sufficiently suppressed.

Any of the embodiments described above is an example of the present invention, and structures other than ones shown in the drawings may incorporate the invention. For example, the wire 22 may be adapted to have a tension along the lower border of the airbag by pulling the lower rear end (or front end) of the airbag.

Also, according to the present invention, a guide member may be provided for guiding longitudinal ends of a curtain airbag downward deploying along the side of a vehicle compartment so as to generate a tension along the lower border of the airbag by the guide member. In this case, the guide member may be provided with an anchor portion formed by bending or curving the lower portion of the guide member so as to stop the ends of the curtain airbag descending along the guide member from returning upward. Forming the anchor portion by bending or curving the guide member in such a manner is very simple in comparison with forming a latch portion like in USP No. 6,237,938, reducing the manufacturing cost of the guide member.

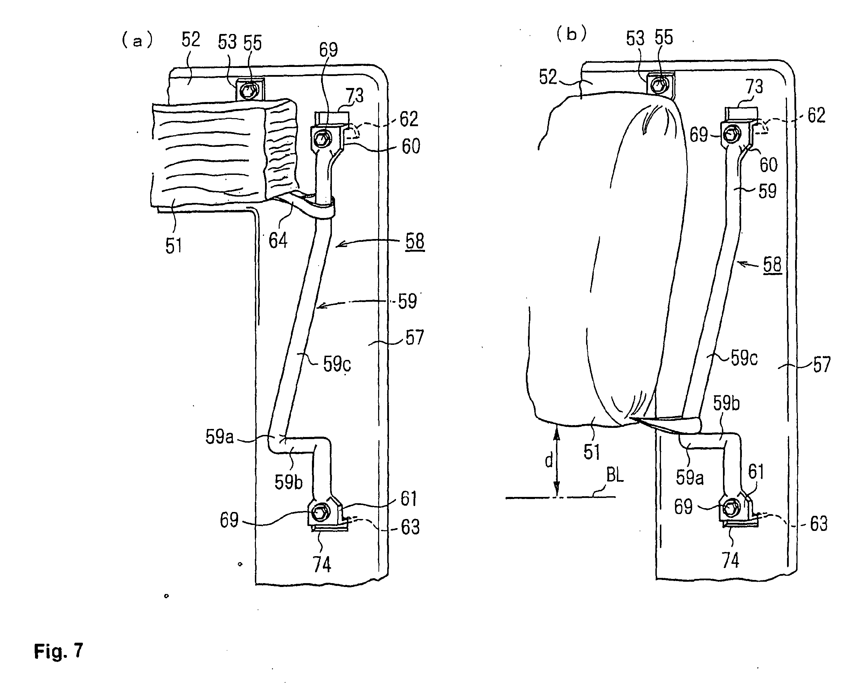

Fig. 7 is a perspective view of an airbag apparatus having such a guide member so as to generate a tension in the lower border of the head-protecting airbag; Fig. 7(a) shows a folded state of the airbag; and Fig. 7(b) shows a state that the inflation of the airbag is completed.

According to this airbag apparatus, a head-protecting airbag 51 is arranged along a roof side portion of a vehicle (boundary between a ceiling and a side of a vehicle compartment) 52 in a slenderly folded state in a longitudinal direction. When an automobile is collided side-on or rolls sideways, the airbag 51 starts inflating by gas from the inflator so as to inflate and deploy toward the bottom of the vehicle body along the side of the vehicle compartment, such as doors and pillars. The airbag 51 is provided with selvages 53 formed in the upper border. By inserting bolts 55 into bolt-insertion holes of the selvages 53 so as to be screwed into tapped holes of the roof side portion 52, the airbag 51 is anchored to the roof side portion 52.

To a C-pillar 57 of an automobile, a guide member 58 is attached for guiding the rear end of the airbag 51 along the C-pillar 57 when the airbag 51 is inflated along the C-pillar 57 toward the bottom of the vehicle body. The guide member 58 includes a rod-like guide portion 59 extending along the C-pillar 57 in the vertical direction of the vehicle body, upper and lower fixing parts 60 and 61 for respectively fixing upper and lower ends of the guide portion 59 to the C-pillar 57, and temporary anchor portions 62 and 63 for temporarily anchoring the upper and lower fixing parts 60 and 61 to temporary openings 73 and 74 of the C-pillar 57, respectively, when the guide member 58 is attached to the C-pillar 57.

The airbag 51 is provided with a loop connection band 64 attached to the vicinity of the lower rear end corner, and the rear end is connected to the guide member 58 by inserting the guide portion 59 into the connection band 64.

The guide portion 59 is made of a pipe-like member. The lower part of the guide portion 59 is bent in a substantial crank-shape so as to form an anchor portion 59a made of an L-shaped corner protruding toward the airbag 51 for the connection band 64. A substantial horizontal portion 59b linking with the anchor portion 59a functions as a stopper for stopping the connection band 64 from moving to a position lower than the anchor portion 59a.

The guide member 58 is fixed to the C-pillar 57 by inserting bolts 69 into bolt-insertion holes provided in the fixing parts 60 and 61 so as to be screwed into tapped holes formed in the C-pillar 57, respectively.

In the airbag apparatus shown in Fig. 7 and structured in such a manner, when the airbag 51 starts inflating by the operation of the inflator, while being guided by the guide member 58 with the connection band 64 therebetween, the airbag 51 is deployed toward the bottom so as to complete the inflation as shown in Fig. 7(b).

According to this airbag apparatus, the guide member 58 is arranged so that the higher a portion 59c upper than the anchor portion 59a is, the more it is located rearward the vehicle. Hence, when the airbag 51 is completed to inflate, the connection band 64, which is the rear end of the airbag 51, is prevented from upward returning. That is, when the airbag 51 is inflated, the length in the longitudinal direction is reduced by a tension applied to the external surface so that the rear end is pulled forward. In the completed step of the inflation shown in Fig. 7(b), the connection band 64 cannot move upward and rearward along the guide portion 59 so as to remain at the anchor portion 59a, thereby generating a strong tension along the lower border of the airbag 51.

Also, according to this airbag apparatus, in a completed state of inflation of the airbag 51, a space d between the lower border of the airbag 51 and the beltline BL (Fig. 7(b)) is 82.5 mm or less. Thereby, the movement of the head of an occupant toward the vehicle outside is sufficiently suppressed.

## Claims

1. A head-protecting airbag apparatus, comprising:
a head-protecting airbag (1; 1') capable of inflating along a side surface of a vehicle compartment, and
tension-applying means for applying a tension to the inflated airbag (1; 1') along a lower border of the airbag (1; 1'), the tension-applying means comprising a linear member (22) extending along a lower border of the inflated airbag (1; 1') and means (30) for applying a tension to the linear member (22),
wherein when the airbag (1; 1') is inflated, the linear member (22) is positioned at a height of 82.5 mm or less above a beltline (BL) of the vehicle so that the inflated airbag (1; 1') has a vertical width so as to have a lower-border height of 82.5 mm or less from the beltline (BL) of the vehicle,
**characterized in that**
the rear end of the linear member (22) extends from a lower rear extremity of the airbag (1; 1') around a one-way pulley (30), is then routed upward from the one-way pulley (30) to a rear pulley (41) so as to proceed forward, and extends from the rear pulley (41) to a front pulley (42), and
wherein the linear member (22) is routed around the front pulley (42) so as to proceed downward through the airbag (1; 1') to the lower border of the airbag (1; 1') so that its end is fixed to the lower border of the airbag (1; 1').

2. The head-protecting airbag apparatus according to Claim 1,
wherein the one-way pulley (30) comprises a thin box-like case (31), a pulley body (32) arranged inside the case (31), and a guide surface (33) extending in an arch shape along the external periphery of the pulley body (32), the pulley body (32) being rotatably supported to the case (31) with a shaft (34) therebetween which is eccentric relative to the pulley body (32).

3. The head-protecting airbag apparatus according to Claim 2,
wherein the pulley body (32) of the one-way pulley (30) is provided with an arch-shaped bulged portion (32a) so as to face the guide surface (33).

4. The head-protecting airbag apparatus according to Claim 2 or Claim 3,
wherein passage holes (35, 36) for the linear member (22) are formed on front and upper surfaces of the case (31).

5. The head-protecting airbag apparatus according to any one of the preceding claims, further comprising an inflator (6) for inflating the head-protecting airbag (1, 1'; 51).

6. A vehicle comprising the head-protecting airbag apparatus according to any one of the preceding claims.

## Patentansprüche

1. Kopfschutzairbagvorrichtung umfassend:
einen Kopfschutzairbag (1; 1'), welcher in der Lage ist, sich entlang einer seitlichen Oberfläche eines Teilraums eines Fahrzeugs aufzublasen, und
Zug aufbringende Mittel, um einen Zug auf den aufgeblasenen Airbag (1; 1') entlang einem unteren Rand des Airbags (1; 1') aufzubringen, wobei die einen Zug aufbringenden Mittel ein lineares Teil (22), welches sich entlang einem unteren Rand des aufgeblasenen Airbag (1; 1') erstreckt, und Mittel (30), um einen Zug auf das lineare Teil (22) aufzubringen, umfasst,
wobei, wenn der Airbag (1; 1') aufgeblasen ist, das lineare Teil (22) in einer Höhe von 82,5 mm oder weniger oberhalb einer Gürtellinie (BL) des Fahrzeugs angeordnet ist, so dass der aufgeblasene Airbag (1; 1') eine vertikale Breite aufweist, um so eine Höhe von der Gürtellinie (BL) des Fahrzeugs zu dem unteren Rand von 82,5 mm oder weniger aufzuweisen,
**dadurch gekennzeichnet,**
**dass** sich das hintere Ende des linearen Teils (22) von einem unteren hinteren äußeren Ende des Airbags (1; 1') um eine Einwegrolle (30) herum erstreckt, dann von der Einwegrolle (30) zu einer hinteren Rolle (41) geführt wird, um nach vorn zu verlaufen, und sich von der hinteren Rolle (41) zu einer vorderen Rolle (42) erstreckt, und
**dass** das lineare Teil (22) um die vordere Rolle (42) herum geführt wird, um so durch den Airbag (1; 1') zu dem unteren Rand des Airbags (1; 1') zu verlaufen, so dass sein Ende an dem unteren Rand des Airbags (1; 1') befestigt ist.

2. Kopfschutzairbagvorrichtung nach Anspruch 1,
wobei die Einwegrolle (30) ein dünnes kastenähnliches Gehäuse (31), einen Rollenkörper (32), welcher innerhalb des Gehäuses (31) angeordnet ist, und eine Führungsoberfläche (33), welche sich in einer Bogenform entlang dem äußeren Umfang des Rollenkörpers (32) erstreckt, umfasst, wobei der Rollenkörper (32) drehbar mit einer Welle (34) dort dazwischen an dem Gehäuse gehalten wird, welche relativ zu dem Rollenkörper (32) exzentrisch ist.

3. Kopfschutzairbagvorrichtung gemäß Anspruch 2,
wobei der Rollenkörper (32) der Einwegrolle (30) mit einem bogenförmigen ausgebauchten Abschnitt (32a) versehen ist, um so der Führungsoberfläche (33) gegenüberzuliegen.

4. Kopfschutzairbagvorrichtung nach Anspruch 2 oder Anspruch 3,
wobei Durchgangslöcher (35, 36) für das lineare Teil (22) auf vorderen und oberen Oberflächen des Gehäuses (31) ausgebildet sind.

5. Kopfschutzairbagvorrichtung nach einem der vorhergehenden Ansprüche, weiter eine Aufblasvorrichtung (6) zum Aufblasen des Kopfschutzairbags (1, 1; 51) umfassend.

6. Fahrzeug umfassend die Kopfschutzairbagvorrichtung nach einem der vorhergehenden Ansprüche.

## Revendications

1. Appareil de coussin de sécurité gonflable de protection de la tête, comprenant :
- un coussin de sécurité gonflable (1 ; 1') de protection de la tête capable de se gonfler le long d'une surface latérale d'un habitacle de véhicule ; et
- un moyen d'application de traction pour appliquer une traction au coussin de sécurité gonflable gonflé (1 ; 1') le long d'une limite inférieure du coussin de sécurité gonflable (1 ; ; 1'), le moyen d'application de traction comprenant un élément linéaire (22) s'étendant le long d'une limite inférieure du coussin de sécurité gonflable gonflé (1 ; 1') et un moyen (30) pour appliquer une traction à l'élément linéaire (22),
dans lequel lorsque le coussin de sécurité gonflable (1 ; 1') est gonflé, l'élément linéaire (22) est positionné à une hauteur de 82,5 mm ou moins au-dessus d'une ceinture de caisse (BL) du véhicule de telle sorte que le coussin de sécurité gonflable gonflé (1 ; 1') présente une largeur verticale de manière que la hauteur de limite inférieur soit de 82,5 mm ou moins depuis la ceinture de caisse (BL) du véhicule ;
**caractérisé en ce que**:
- l'extrémité arrière de l'élément linéaire (22) s'étend depuis une extrémité arrière inférieure du coussin de sécurité gonflable (1 ; 1') autour d'une poulie à une voie (30), et est ensuite dirigée vers le haut depuis la poulie à une voie (30) vers une poulie arrière (41) de manière à avancer vers l'avant et s'étend depuis la poulie arrière (41) vers une poulie avant (42), et
dans lequel l'élément linéaire (22) est dirigé autour de la poulie avant (42) de manière à avancer vers le bas à travers le coussin de sécurité gonflable (1 ; 1') vers la limite inférieure du coussin de sécurité gonflable (1; 1') de manière que son extrémité soit fixée à la limite inférieure du coussin de sécurité gonflable (1 ; 1').

2. Appareil de coussin de sécurité gonflable de protection de la tête selon la revendication 1,
dans lequel la poulie à une voie (30) comprend un boîtier (31) en forme de caisson mince, un corps de poulie (32) agencé à l'intérieur du boîtier (31) et une surface de guidage (33) s'étendant en une forme d'arc le long de la périphérie externe du corps de poulie (32), le corps de poulie (32) étant supporté à rotation sur le boîtier (31) avec un arbre (34) qui est excentré par rapport au corps de poulie (32).

3. Appareil de coussin de sécurité gonflable de protection de la tête selon la revendication 2,
dans lequel le corps de poulie (32) de la poulie à une voie (30) est muni d'une partie renflée en forme d'arc (32a) pour à faire face à la surface de guidage (33).

4. Appareil de coussin de sécurité gonflable de protection de la tête selon la revendication 2 ou la revendication 3,
dans lequel des trous de passage (35, 36) pour l'élément linéaire (22) sont formés sur les surfaces avant et supérieure du boîtier (31).

5. Appareil de coussin de sécurité gonflable de protection de la tête selon l'une quelconque des revendications précédentes, comprenant en outre un gonfleur (6) pour gonfler le coussin de sécurité gonflable de protection de la tête (1, 1' ; 51).

6. Véhicule comprenant l'appareil de coussin de sécurité gonflable de protection de la tête selon l'une quelconque des revendications précédentes.
